Europäisches Patentamt

European Patent Office

Office européen des brevets

(11) Publication number: **0 454 040 A2**

# EUROPEAN PATENT APPLICATION

(21) Application number: 91106479.8

(22) Date of filing: 23.04.91

(51) Int. Cl.⁵: **G05D 11/13, C09B 67/00**

(30) Priority: 26.04.90 IT 2014390

(43) Date of publication of application:
**30.10.91 Bulletin 91/44**

(84) Designated Contracting States:
**AT BE CH DE ES FR GB GR IT LI NL**

(71) Applicant: **ELETTROMECCANICA SALCE SAS DI SALCE GIAN PIETRO & C.**
**Via Imer Zona, 126/128**

I-13060 COSSATO (VERCELLI)(IT)

(72) Inventor: **Salce, Gian Pietro**
**Via San Giovanni Bosco 17**
**I-13060 Valdengo (Vercelli)(IT)**

(74) Representative: **Michelotti, Giuliano et al**
**c/o SAIC BREVETTI S.r.l. Viale Bianca Maria 15**
**I-20122 Milano(IT)**

(54) **Volumetric proportioner particularly useful in prepearing dye recipes for industrial dyeing.**

(57) Volumetric proportioner consisting in a first rotatable pad (14) housing a first number of bottles (18a-m) containingn dye solutions as ingredients of compositions to be formed in beakers (20a-f) housed on a second rotatable pad (16) which beakers receive solution proportions coming from the bottles (18a-m), being said proportions metered by means of a possibly graduated syringe (52), provided with a controllably positionable piston, being the syringe (52) movable between one of the bottles (18a-m) housed in the first pad (14) and one of the beakers (20a-f) housed on the second pad (16), being said syringe able to be immersed in a cleaning assembly (60) arranged between the first pad (14) and the second pad (16).

Fig.2

EP 0 454 040 A2

The present invention refers to a volumetric proportioner particularly useful in preparing dye samples to be used for industrial dyeing of yarns and fabrics and particularly, to the experimental preparation of the so-called "dye recipes" i.e. the proportioning of the composition of a dye to be used, once determined, for yarn and fabric dyeing in industrial scale.

There are weight proportioners for determining dye recipes to be prepared, comprising substantially a balance on which are loaded beakers provided to receive weight measurable quantities of dyeing solutions to be combined.

A presently used specific weight proportioner includes a microbalance, housing a beaker on a pan, and a plurality of bottles, containing dyeing solutions, connected to said beaker by means of pouring ducts providing to transfer, on command, presettable weight quantities of the solutions in the beaker.

The solution quantities to be transferred are set, for example, by means of a computer control and the balance indicates through a feed-back loop the weight of the transferred solution for stopping the the transfer thereof when the desired weight has been provided. To provide said transfer, the bottles are provided with pneumatic means thrusting the dyeing solution therefrom in the connecting ducts to the beaker and stopping the thrust on the solution when the desired or asked solution weight is obtained.

At a first sight, this system seems to afford very high care in determining the recipe because nowadays it is relatively easy to find excellent microbalances and also because it is supposed that liquid transfer, expecially if provided through pneumatic actuation of bottles, lends itself to a rather careful control owing to the precision of the present pneumatic controls.

However the plurality of ducts connecting the many bottles to the beaker with the relating length difference thereof, inserts inaccuracy causes lowering the quality of the obtainable results.

Another problem is connected to the fact that it needs keep in bottles and ducts dyeing solutions whose storage time is limited, sometime to just a few hours, which can degrade becoming unsiutable before having had the occasion of using them with consequent problems connected to replacements and cleanings not allways easily feasible.

It is an object of the present invention to provide a proportioner for the preparation of recipes in industrial dyeing which is simple, practical and immediate in use, even by not highly qualified personnel, and allowing a satisfying proportioning care.

It is another object to provide a proportioner limiting the most the possible the problems connected to the storing times of some dyeing solutions and the need of cleaning the proportioning members.

It is known from the practice of general chemical laboratories that a volumetric proportioning by means of pipes, test tubes, graded beakers, and the like, generally known as "pipetting" has shown satisfying care in the most cases of the laboratory tasks themselves.

Thus, a volumetric proportioner for preparing dye recipes according to the present invention consists of a plurality of first vessels containing dyeing solutions, volumetric proportioning means and transferring means of volumetrically determined proportions of said dyeing solutions to a plurality of second vessels, wherein the asked dies are formed, and control and recording means for determining the volumetric proportions of any added solution to anyone of the second vessels and recording the proportions of recipes giving the asked results.

Paricularly, said first volumetric proportioning and transfer means consist of a proportioner provided with movable parts, carefully positionable on command, which determine in an unequivocal way asked proportions of dyeing solutions and similar additives, being the positioning of said movable parts controlled by computer means controlling the formulation of recipes to be prepared by means of the proportioning system provided by the present invention.

In addition, said proportioning means are also positionable on a washing assembly, comprised of a vessel containing cleaning solutions, from which they can draw said solutions to provide to their cleaning when that is required by the specific process being carried-out, as for example when it is to change the dye to be used, in order to avoid contamination of dyeing solutions.

Preferably, the plurality of first vessels consists of bottles housed on a first rotatable pad, selectively orientable on command of control means, as for example an electronic processor, for having the bottle containing the asked dyeing solution coincident with the point on which comes down the proportioner for operating a solution drawing.

Also preferably, the plurality of second vessels is comprised of beakers housed on a second rotatable pad, selectively orientable on command of said control means themselves for having the beaker, selected to contain the composition according to the desired recipe, coincident with the point where the proportioner comes down for operating a solution release.

Specifically, the proportioner used in the present invention consists of a syringe provided with a piston which can be carried in a wanted position to determine any desired volumetric proportion by means of the use of a controllable positioner, as a stepping motor.

More particularly, said stepping motor actuates said piston by means of a gear engaging a thereto fastened cogget belt.

In a specific embodiment of the invention said volumetric proportioner, in the form of a syringe having a piston actuated by a stepping motor, is assembled on an arm orientable according to three different angular positions respectively corresponding to drawing from bottle on the first rotatable pad, releasing into a beaker on the second rotatable pad and to an intermediate cleaning position on the cleaning assembly itself.

More particularly, the orientable arm of the volumetric proportioner is assembled to a stud arranged substantially perpendicular with respect to the planes of the first and second rotatable pads to allow to pull down and raise on command said arm in order to carry-out the above mentioned drawing, releasing and cleaning operations.

Preferably, the first turnable pad is positioned in the desired directions by a selfbraking electric motor controlled by a plurality of position sensors, sensing the orientation of the pad itself, the second rotatable pad is positioned in the desired directions by an electric motor, preferably a DC motor controlled by a plurality of position sensors detecting the orientation, the turnable arm is angularly positioned in the three shown positions by an electric motor or similar actuator allowing just two positions.

Alternatively, the first and second rotatable pads are positioned in the desired directions by means of the use of stepping motors.

The features and the advantages of the present invention will be better apreciated from the following detailed description of an embodiment, not to be construed in limiting sense altogether, provided with the enclosed drawings, wherein:

- Figure 1 is a schematic top view of an embodiment of the volumetric proportioner according to the present invention;

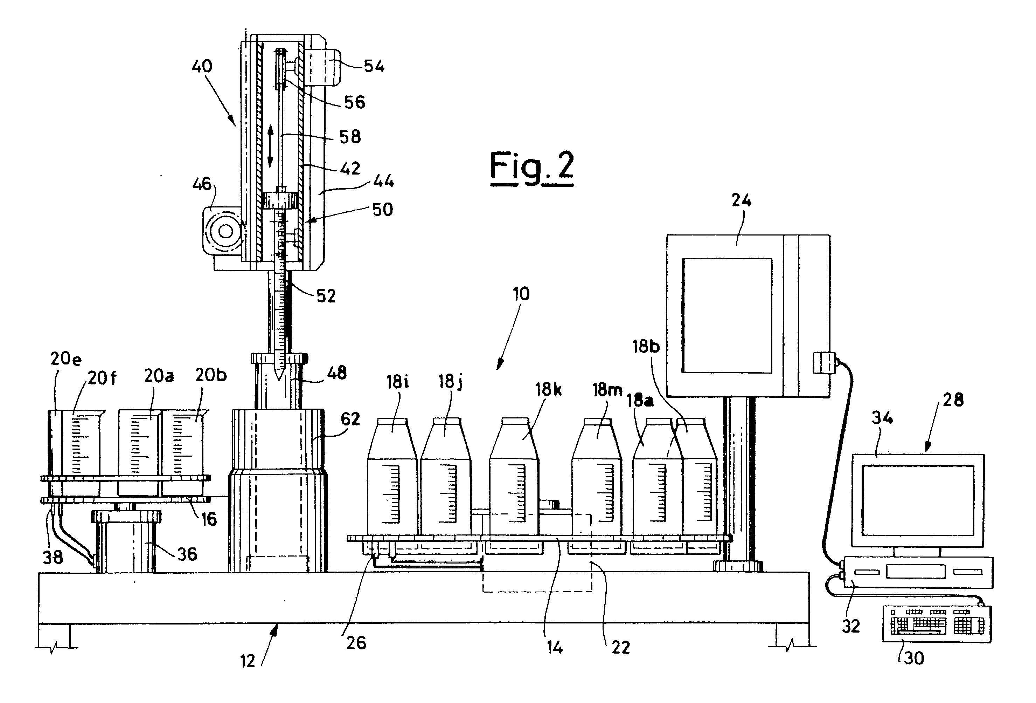

- Figure 2 is a lateral schematic view of the same volumetric proportioner shown as connected to an electronic processor providing all the operations for controlling movements, determining volumetric proportions, recording and trascribing recipes determined by the help of the proportioner according to the present invention.

Referring to the two figures, it is seen that a volumetric proportioner 10 according to the invention consists of a table 12 pivottingly supporting two pads 14 and 16 respectively housing some bottles 18a-m provided to contain dyeing solutions, or the like, usable as ingredients of dye recipes, having duty in industrial dyeing, which are formulated in beakers 20a-f. The rotatable pad 14 is moved in rotation by an electric motor 22 which in the here depicted specific embodiment is an AC electric motor, of the selfbraking kind, which is actated by circuits housed in a control board 24 and receives information from sensors 26 of angular position of the said pad, housed thereunder and command directions from an electronic processor 28 conventionally consisting of a keyboard 30, a store 32 and a display 34. Of course, said processor 28 can also be provided with other periferal units, such as printers and plotters which are not shown because they are not part of the present invention.

The rotatable pad 16 is rotated by an electric motor 36, which in the here depicted embodiment is a DC motor, actuated by circuits housed in the board 24 and receiving information from angular orientation detectors 38, housed under the pad itself and directions from the above mentioned electronic processor 28.

The transfer of dye solutions from the bottles 18a-m to anyone of the beakers 20a-f is provided by transferring and proportioning means 40 consisting of a first arm 42 assembled to a stud 44, along which it is raised and lowered by means of a motor 46, being said stud 44 in turn orientable by means of a motor 48 supported by the table 12. Said first arm 42 supports at the end more distant from the stud 44 a volumetric proportioner 50 formed by a syringe 52 whose piston is moved, up and down, by an electric motor 54, of stepping kind, which by means of an assembly comprised of a gear 56, fastened to the motor shaft, and a cogget belt 58, fastened to the external end of said piston, applies to the piston movements associated to the step numbers imposed to the motor 54 which can be detremined in advance by controls coming from the electronic processor 28, by means of the interface of the control board 24. As the stepping motor 54 can be selected of the kind having a high number of steps per turn (for example 400 steps per turn), it happens that it is very easy to make very small movements of the piston, so determining a very careful volumetric proportioning.

To provide possible cleaning of the syringe 52 of the volumetric proportioner 50, is used a cleaning or washing assembly 60 essentially formed by a vessel 62, as a beaker, wherein are poured solvents or solutions able to provide a cleaning of the syringe 52, when that is needed, being the beaker 62 easily replaced with different similar beakers containing other solvents or solutions when for a specific cleaning operation more than one matter is required. Of course, instead of just one beaker 62 could be used more beakers, if a cleaning cycle requires more than one matter.

The operation of the present invention is the following one:

when recipes for desired dyes, to be applied to yarns and fabrics, are to be prepared, on the second pad 16 are placed some beakers 20a-f, on the first pad 14 are placed so many bottles 18a-m how many are the expected ingredients for the recipes to prepare and by means of the keyboard 30 of the electronic processor 28 are accessed into its processing and storing unit directions regarding the individual bottles 18a-m housed on the pad 14 (i. e. which dyeing solutions and thus which bottles to choose) and the volume quantities to be removed from any single bottle, other directions regarding the single beakers 20a-f housed on the pad 16 (i. e. which beakers have to receive some dyeing solutions in determined quantities). Of course, as it is to avoid the contamination of any dyeing solution by other solutions, it is proceeded in making all the transfers and proportionings expected for any single dyeing solution before passing to another solution.

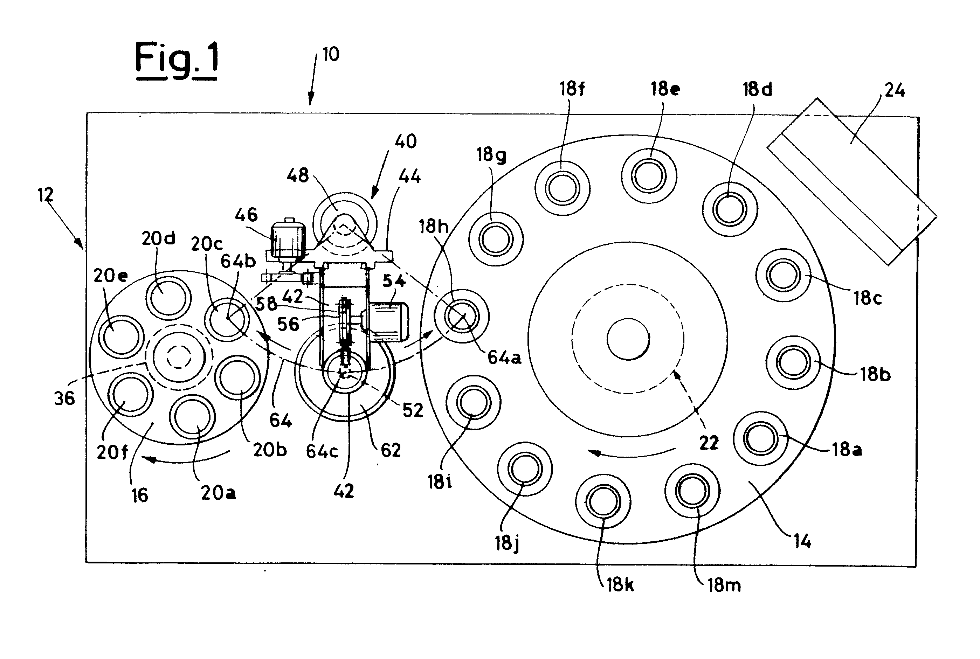

For making said transfer the arm 42 moves the syringe 52 along an arc 64 (figure 1) between a first loading position 64a, above one of the bottles 18, where it is provided to lower said syringe into the bottle and operate a volume drawing, indicated by the computer, corresponding to the volume addition of solution to supply to the individual beakers 20a-f and a second supplying position 64b, above on e of the beakers 20, wherein is provided to supply the proportion of dyeing solution for any individual beaker. The fact that the pad 16 is rotatable is used to bring under the proportioning syringe 52 all the beakers in which is intended to admit a dyeing solution. Once made the proportioning of dyeing solution in all the beakers 20a-f to which it is intended, the syringe 52 is brought to the position 64c above the cleaning assembly 60 and is lowered thereinto, providing through proper movements of the piston to clean the syringe itself. Once completed the syringe cleaning, another dyeing solution is handled making the pad 14 to rotate until the required bottle is under the position 64a where has to came the syringe 52 to provide to draw this other dyeing solution, in the quantity corresponding to the proportion addition which has to be supplied into the individual beakers 20a-f, and the arm 42 is then rotated to bring said syringe 52 in the position 64b where it provides to supply to the intended beakers 20a-f, brought under this position by the rotation of the pad 16, the due volumetric proportions.

It is proceeded in this way, by alternating draws in the position 64a, supplies in the position 64b and cleanings in the position 64c till the recipes in the individual beakers 20a-f are intended as completed.

While tese operations are done, the electronic processor 28 takes into account the used dyeing solutions and their volumetric proportions supplied to every individual beaker, thus temporarily storing all the dyeing recipes formulated in the individual beakers. Once completed the recipe formulations in the beakers 20a-f, yarn or fabric samples are therein admitted and are subsequentely tested.

A test, either visual or through a proper colorimetric analyzer, indicates which recipes can be intended as valid for the wanted dyeing purposes and the formulations of said recipes can be definitely stored on means drawable from the processor, such as magnetic diskettes, directly playable or further processable to make their directions of practical use, to be sent to processors providing to formulate dyeing compositions on industrial scale, or simply the recipes intended as valid could be printed by a printer associated to said processor for having copies thereof. Of course, alternatively, the directions regarding the valid recipes can be sent to other processors, providing to formulations of dyes on industrial scale, by means of computer connecting lines common in transferring data among computers, without however coming out from the inventive scope, because these alternate systems are not part of the invention.

What has been hereabove disclosed is a non limiting embodiment of the invention and those skilled in the art will be able to devise obvious replacements and equivalent solutions to be all intended as here covered.

## Claims

1. Volumetric proportioner for preparing dyeing recipes consisting of a plurality of first vessels (18a-m) containing dyeing solutions, means (40) volumetrically proportioning and transferring volumetrically determined proportions of said dyeing solutions to a plurality of second vessels (20a-f) wherein the required dyes are formed and control and storing means (28) for determining the volumetric proportions of every solutions added to anyone of the second vessels (20a-f) and recording the proportions of recipes which gave the required results.

2. Volumetric proportioner, as in claim 1, characterized in that said volumetric proportioning and transferring means (40) consist of a volumetric proportioner (50) provided with movable members, carefully positionable on command, unambiguously determining required portions of dyeing solution and similar additives, the positioning of said movable parts being controlled by computer means (28) providing to formulate said recipes.

3. Volumetric proportioner, as in claim 2, characterized in that said proportioning means (40) are also positionable on a cleaning assembly (60), comprised of a vessel (62) containing cleaning or washing solutions, from which they can draw said solutions for providing to their cleaning when that is required by the specific process to be carried out, as for example when the kind of dyeing solution to be used is changed, in order to avoid contaminations of dyeing solutions.

4. Volumetric proportioner, as in preceeding claims, characterized in that the plurality of first vessels is comprised of bottles (18a-m) housed on a first rotatable pad (14) selectively orientable on command of control means, such as an electronic processor (28), for having the bottle (18), containing the required dyeing solution, coincident with a point (64a) on which descends the proportioner (50) for operating a drawing of a solution.

5. Volumetric proportioner, as in claim 4, characterized in that the plurality of second vessels is comprised by beakers (20a-f) housed on a second rotatable pad (16) selectively orientable on command of said control means themselves for having the beaker (20), intended to contain the composition according to the wanted recipe, coincident with a point (64b) on which the proportioner (50) descends for operating the release of a solution.

6. Volumetric proportioner, as in preceeding claims, characterized in consisting of a syringe (52) provided with a piston which can be brought in any wanted position for determining every desired volumetric proportion by means of a controllable positioner, such as a stepping motor (54).

7. Volumetric proportioner, as in claim 6, characterized in that said stepping motor (54) actuates said piston by means of a gear (56) engaging a cogget belt (58) fastened thereto.

8. Volumetric proportioner, as in claim 7, characterized in that the syringe (52), having the piston actuated by the stepping motor (54) is mounted on an arm (42) orientable in three different angular positions respectively corresponding to the position (64a) of drawing from bottle (18) over the first rotatable pad (14), the second position (64b) of release in a glass (20) over the second rotatable pad (16) and the intermediate cleaning position (64c) over the cleaning assembly itself (60).

9. Volumetric proportioner, as in claim 8, characterized in that the orientable arm (42) is mounted on a stub (44) arranged substantially perpendicular with respect the planes of the first and second rotatable pads (14, 16) to allow to lower and raise on command said arm (42) in order to carry out drawing, releasing and cleaning operations.

10. Volumetric proportioner, as in preceeding claims, characterized in that the first roatable pad (14) is positioned in the desired orientations by a selfbraking electric motor (22) controlled by a plurality of position sensors (26) sensing the orientation of the pad (14) itself, the second rotatable pad (16) is positioned in the desired orientations by an electric motor (36), preferably a DC motor controlled by a plurality of position sensors (38) sensing the orientation thereof, the orientable arm (42) is angularly positioned in the three shown positions (64a, 64b and 64c) by an electric motor (48), or similar actuator, allowing just three positions and is lowered and raised by means of an electric motor (46), or similar actuator allowing just two positions.

11. Volumetric proportioner, as in preceeding claims, characterized in that the first and second rotatable pads (14, 16) are positioned in the desired orientaions by means of stepping motors.

Fig.1

Fig.2